(19) **Europäisches Patentamt / European Patent Office / Office européen des brevets**

(11) **EP 4 161 717 B1**

(12) **FASCICULE DE BREVET EUROPEEN**

(45) Date de publication et mention de la délivrance du brevet:
**03.07.2024 Bulletin 2024/27**

(21) Numéro de dépôt: **21737702.7**

(22) Date de dépôt: **02.06.2021**

(51) Classification Internationale des Brevets (IPC):
**B22F 1/00** $^{(2022.01)}$   **B22F 3/00** $^{(2021.01)}$
**B29C 45/00** $^{(2006.01)}$   **B29C 67/04** $^{(2017.01)}$
**C04B 35/634** $^{(2006.01)}$   **C08L 91/06** $^{(2006.01)}$

(52) Classification Coopérative des Brevets (CPC):
(C-Sets disponibles)
**C04B 35/63408; B22F 1/103; C04B 35/053;
C04B 35/057; C04B 35/111; C04B 35/46;
C04B 35/486; C04B 35/488; C04B 35/50;
C04B 35/505; C04B 35/5607; C04B 35/5611;
C04B 35/5622; C04B 35/5626; C04B 35/563;**

(Cont.)

(86) Numéro de dépôt international:
**PCT/FR2021/051003**

(87) Numéro de publication internationale:
**WO 2021/245356 (09.12.2021 Gazette 2021/49)**

(54) **LIANT POUR COMPOSITION DE MOULAGE PAR INJECTION**

BINDEMITTEL FÜR SPRITZGUSSZUSAMMENSETZUNG

BINDER FOR INJECTION MOULDING COMPOSITION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.06.2020 FR 2005887**

(43) Date de publication de la demande:
**12.04.2023 Bulletin 2023/15**

(73) Titulaires:
- **SAINT-GOBAIN CENTRE DE RECHERCHES ET D'ETUDES EUROPEEN**
  **92400 Courbevoie (FR)**
- **Centre National de la Recherche Scientifique**
  **75794 Paris Cedex 16 (FR)**
- **UNIVERSITE CLAUDE BERNARD - LYON 1**
  **69100 Villeurbanne (FR)**
- **Université Jean Monnet Saint-Étienne**
  **42023 Saint-Étienne Cedex 2 (FR)**

(72) Inventeurs:
- **PERIE, Thomas**
  **13090 AIX EN PROVENCE (FR)**
- **LINTINGRE, Eric**
  **84000 AVIGNON (FR)**
- **AUSCHER, Marie Camille**
  **SHREWSBURY, MA 01545 (US)**
- **BUNIAZET, Zoé**
  **13350 CHARLEVAL (FR)**
- **DELAROA, Claire**
  **69100 VILLEURBANNE (FR)**
- **CASSAGNAU, Philippe**
  **69390 MILLERY (FR)**
- **FULCHIRON, René**
  **69370 SAINT-DIDIER-AU-MONT-D'OR (FR)**

(74) Mandataire: **Saint-Gobain Recherche Département Propriété Industrielle 39 Quai Lucien Lefranc 93300 Aubervilliers (FR)**

(56) Documents cités:
EP-A1- 0 561 343      EP-A1- 2 765 121
WO-A1-2014/191304    WO-A1-2016/003657
CH-A2- 713 210

(52) Classification Coopérative des Brevets (CPC):
(Cont.)
**C04B 35/565; C04B 35/58; C04B 35/58014;**
**C04B 35/581; C04B 35/583; C04B 35/584;**
**C04B 35/62635; C04B 35/632; C04B 35/63424;**
**C04B 35/63432; C04B 35/638; C08L 91/06;**
B22F 3/225; C04B 2235/3225; C04B 2235/3227;
C04B 2235/5445; C04B 2235/6022;
C04B 2235/6562

C-Sets
**C08L 91/06, C08L 23/06, C08L 23/12, C08L 53/02,**

**C08K 5/09, C08K 3/014**

**Description**

**Domaine technique**

La présente invention se rapporte à un liant pour composition de moulage par injection et à une composition de moulage par injection comportant ledit liant.

**Technique antérieure**

Le moulage par injection de poudre permet l'obtention d'une grande variété de formes de pièces, en une grande variété de matériaux, en particulier, les plastiques, les métaux et les céramiques. Ce procédé permet également de fabriquer de grandes quantités de pièces en limitant les délais de production.
Un procédé de fabrication d'une pièce frittée mettant en oeuvre un moulage par injection de poudre comporte classiquement les étapes suivantes :

A) élaboration de la composition de moulage,
B) moulage par injection de ladite composition de moulage, afin d'obtenir une préforme,
C) déliantage au moins en partie de la préforme,
D) frittage de la préforme au moins en partie déliantée afin d'obtenir une pièce frittée.

L'étape A) consiste à mélanger un liant organique et une poudre, par exemple une poudre métallique ou céramique, optionnellement fonctionnalisée dans le but d'améliorer le contact avec le liant.
Le liant comporte classiquement une base polymérique, une cire et un surfactant. Il a pour rôle de faciliter l'écoulement de la composition de moulage pendant la mise en forme par injection à l'étape B) et de conférer une tenue mécanique suffisante de la préforme pour en permettre la manipulation.
Les poudres céramiques et les poudres métalliques possèdent des propriétés différentes, notamment des propriétés de surface des grains et d'écoulement différentes. Les problèmes posés par le moulage par injection de compositions de moulage comportant des poudres métalliques et des poudres céramiques, et les solutions techniques adoptées pour les résoudre sont donc généralement différents. En particulier, un liant mis au point pour une composition de moulage à base d'une poudre métallique n'est *a priori* pas utilisable tel quel pour une composition de moulage à base d'une poudre céramique.
A l'issue de l'étape A), on obtient une composition de moulage, classiquement appelée « *feedstock* » en anglais.
L'étape A) comprend également classiquement une granulation, de manière à ce que la composition de moulage se présente sous la forme de granulés.
A l'étape B), après avoir été chauffée, la composition de moulage est mise en forme par injection, classiquement à l'aide d'une presse à injecter, de manière à obtenir une préforme. L'étape C) consiste à éliminer, au moins partiellement, de préférence en totalité, le liant présent dans la préforme, en faisant classiquement subir à ladite préforme une attaque par un solvant (déliantage « solvant »), puis une attaque thermique (déliantage thermique).
Le déliantage peut déformer la préforme, ce qui conduit à la fabrication d'une pièce frittée inacceptable.
L'étape D) consiste à consolider la préforme par frittage de manière à obtenir la pièce souhaitée, et également à éliminer l'éventuelle partie du liant qui ne l'aurait pas été lors de l'étape C). Dans un mode de réalisation, le déliantage thermique de l'étape C) et le frittage de l'étape D) sont effectués au sein de la même étape, lors d'un seul cycle thermique.
Il existe un besoin permanent pour un procédé limitant la déformation de la préforme à l'étape C), tout en conduisant à une pièce frittée présentant une masse volumique relative élevée.
Un but de l'invention est de répondre, au moins partiellement, à ce besoin.
WO 2016/003657 A1 divulgue une composition comprenant (a) un interpolymère propylène/éthylène présentant une densité de 0,860 à 0,870 g/cm3; (b) un polymère à base de propylène; (c) un agent plastifiant; et (d) un troisième polymère. L'invention concerne également un article moulé par injection comprenant la composition et un procédé de fabrication d'un article moulé par injection.

**Exposé de l'invention**

**Résumé de l'invention**

L'invention concerne un liant pour composition de moulage par injection, ledit liant consistant en, en pourcentages massiques :

- 35% à 60% d'un composant (a), ou « base polymérique », consistant en un polymère ou un mélange de polymères, chaque dit polymère

- étant dépourvu soit de groupe(s) hydrophile(s), soit de groupe(s) hydrophobe(s), soit de groupe(s) hydrophile(s) et de groupe(s) hydrophobe(s), c'est-à-dire étant « non- amphiphile » et,
- présentant une masse molaire moyenne en masse supérieure ou égale à 5 000 g/mol,

- 30% à 55% d'un composant (b), ou « cire », consistant en un polymère ou un mélange de polymères, chaque dit polymère

 - étant non-amphiphile et
 - présentant une masse molaire moyenne en masse inférieure à 5 000 g/mol, et

- moins de 10% d'un composant amphiphile (c), ou « surfactant », et
- moins de 10% d'autres composants (d),

la somme totale des pourcentages des composants (a), (b), (c) et (d) étant égale à 100%, la base polymérique comportant 2% à 15% d'un copolymère de styrène - éthylène - butylène - styrène, ou « SEBS », en pourcentage massique sur la base de la masse du liant, la teneur massique en styrène dans le SEBS étant supérieure à 15%, en pourcentages massiques sur la base de la masse dudit SEBS, la masse molaire moyenne en masse dudit SEBS étant supérieure à 100 000 g/mol.

De manière remarquable, les inventeurs ont constaté que la présence d'une telle base polymérique, dans les teneurs indiquées, limite la déformation de la préforme à l'étape C), tout en conduisant à une pièce frittée présentant une masse volumique relative élevée.

Un liant selon l'invention permet avantageusement de limiter les opérations de reprise par usinage, qui sont coûteuses, voire impossibles dans le cas de formes complexes.

Un liant pour composition de moulage par injection selon l'invention peut encore présenter une ou plusieurs des caractéristiques optionnelles suivantes :

- la teneur en SEBS est supérieure ou égale à 4% et inférieure ou égale à 13% ;
- la teneur massique en styrène dans le SEBS est supérieure à 20%, de préférence supérieure à 25%, et inférieure à 60%, en pourcentage massique sur la base de la masse dudit SEBS ;
- la masse molaire moyenne en masse du SEBS est supérieure à 160 000 g/mol et inférieure à 400 000 g/mol ;
- la quantité de surfactant est supérieure ou égale à 0,5% ;
- le liant présente, en pourcentages massiques sur la base du liant :

 - une quantité de base polymérique supérieure ou égale à 40%, de préférence supérieure ou égale à 45% et inférieure ou égale à 55%, de préférence inférieure ou égale à 50%, et
 - une quantité de cire supérieure ou égale à 35%, de préférence supérieure ou égale à 40% et inférieure ou égale à 53%, de préférence inférieure ou égale à 50%, et
 - une quantité de surfactant : supérieure ou égale à 1%, de préférence supérieure ou égale à 2% et inférieure ou égale à 8%, de préférence inférieure ou égale à 6%, et/ou
 - une quantité d'autres composants, de préférence un stabilisant supérieure ou égale à 0,5%, de préférence supérieure ou égale à 1% et inférieure ou égale à 8%, de préférence inférieure ou égale à 4% ;

- chaque constituant de la base polymérique présente une masse molaire moyenne en masse supérieure à 20 000 g/mol, de préférence supérieure à 30 000 g/mol, et/ou

 un constituant de la cire, de préférence chaque constituant de la cire présente une masse molaire moyenne en masse supérieure à 400 g/mol et inférieure à 3 000 g/mol, de préférence inférieure à 1 500 g/mol, et/ou chaque constituant du surfactant présente une masse molaire moyenne en masse inférieure à 800 g/mol, de préférence inférieure à 500 g/mol ;

- la base polymérique du liant comporte un polymère choisi parmi les polypropylènes, les polyéthylènes, les éthylène-acétates de vinyle, les éthylène-acrylates d'éthyle, les polystyrènes, les carbonates de polyéthylène, le phtalate de diéthyle, le phtalate de dioctyle, le phtalate de dibutyle, l'alcool polyvinylique, le polyacétate de vinyle, les copolymères d'éthylène et d'acide méthacrylique, le polychlorure de vinyle, le polybutyral vinylique, un polyacétal, un polyméthacrylate de méthyle, un polybutyl méthacrylate, un copolymère d'ester d'acide méthacrylique, un méthyléthylcétone, les résines, et leurs mélanges, et/ou

la cire du liant comporte, voire est constituée par une cire choisie parmi la cire de carnauba, une cire de paraffine, une cire d'abeilles, une cire de polyéthylène, une cire microcristalline, une huile végétale, une huile d'arachide, une huile minérale, la glycérine et leurs mélanges, de préférence une cire de paraffine, et/ou

le surfactant du liant comporte, voire est constitué par un constituant amphiphile choisi parmi un éthylène-bis-stéaramide, la stéarine, l'acide palmitique, le stéarate de butyle, l'acide borique, l'acide oléique, l'acide laurique, l'acide stéarique et leurs mélanges ;

- la base polymérique du liant comporte un mélange de polypropylène et de polyéthylène en un rapport massique polypropylène / polyéthylène supérieur à 25/75 et inférieur à 50/50, et/ou

le surfactant du liant est constitué par un constituant amphiphile choisi parmi un éthylène-bis-stéaramide, l'acide stéarique et leurs mélanges.

L'invention concerne également une composition de moulage par injection comportant un liant selon l'invention en une quantité comprise entre 30% et 65%, en pourcentages volumiques sur la base du volume de la composition de moulage, le complément étant pour plus de 90% en masse une poudre céramique.

Une composition de moulage selon l'invention peut encore présenter une ou plusieurs des caractéristiques optionnelles suivantes :

- la quantité de liant est supérieure ou égale à 45% et inférieure ou égale à 55%, en pourcentage en volume sur la base du volume de la composition de moulage, et/ou la poudre céramique comporte plus de 90% en masse de nitrure(s) et/ou de carbure(s) et/ou d'oxyde(s) ;
- la poudre céramique comporte plus de 90% en masse d'oxyde(s), lesdits oxydes étant choisis parmi $ZrO_2$, $Y_2O_3$, $CeO_2$, CaO, MgO, les oxydes de manganèse, ZnO, les oxydes de praséodyme, les oxydes de cuivre, BaO, les oxydes de fer, $Sc_2O_3$, $TiO_2$, $Al_2O_3$, $La_2O_3$, $Nd_2O_3$, $Yb_2O_3$, et leurs mélanges.

L'invention concerne encore un procédé de fabrication d'une pièce frittée, ledit procédé comportant les étapes A) à D) décrites ci-dessus, la composition de moulage étant conforme à l'invention.

## Définitions

- On appelle classiquement « polymère », une macromolécule constituée d'un enchaînement de monomères, identiques ou différents, unis les uns aux autres par des liaisons covalentes.
- On appelle classiquement « masse molaire moyenne en masse » d'un composant, notée $M_w$, la moyenne des masses molaires de toutes les chaînes du composant dans un échantillon, pondérée par la masse des chaînes de chaque longueur dans ledit échantillon. Soit Mi la masse molaire d'une chaîne i et Ni le nombre de chaînes de masse Mi, la masse molaire moyenne en masse est égale à :

$$Mw = \frac{\sum_i Ni.Mi^2}{\sum_i Ni.Mi}$$

- On appelle classiquement « polyéthylène haute densité » ou PEHD, un polyéthylène présentant une masse volumique supérieure ou égale à 930 kg/m$^3$ et inférieure ou égale à 970 kg/m$^3$.
- Un composant est « amphiphile » lorsqu'il présente à la fois une partie composée d'un ou plusieurs groupe(s) hydrophile(s) et une partie composée d'un ou plusieurs groupe(s) hydrophobe(s). A contrario, un composant dit « non-amphiphile » est dépourvu soit de groupe(s) hydrophile(s), soit de groupe(s) hydrophobe(s), soit de groupe(s) hydrophile(s) et de groupe(s) hydrophobe(s).
- Un composant, notamment un polymère ou une poudre sont dits « fonctionnalisés » lorsqu'un ou des groupes chimiques leur conférant une ou plusieurs propriétés spécifiques ont été modifiés, notamment par ajout et/ou remplacement. Par exemple, les particules d'une poudre de silice peuvent être fonctionnalisées par l'action de silanes, conduisant à rendre hydrophobe la surface desdites particules.
- Une « poudre céramique » est une poudre constituée de plus de 95%, de préférence de plus de 98%, de préférence de plus de 99% en masse, de particules chacune constituées, pour plus de 95%, de préférence plus de 98%, de préférence plus de 99% de leur masse, en un matériau céramique. Lesdites particules peuvent être de même composition ou non.
- On appelle classiquement « frittage » la consolidation, par traitement thermique, classiquement à plus de 1 100°C, d'une préforme comportant un agglomérat de particules. Le frittage peut être en phase liquide lorsque le traitement thermique entraîne l'apparition d'un liquide qui va permettre le réarrangement des grains et former des ponts liquides entre ceux-ci pour les amener au contact les uns des autres. Le frittage peut également être en phase solide lorsqu'au cours du traitement thermique la soudure entre les grains est réalisée sans création d'une phase liquide.

- On appelle « taille médiane » d'une poudre de particules, généralement notée $D_{50}$, la taille divisant les particules de cette poudre en première et deuxième populations égales en masse, ces première et deuxième populations ne comportant que des particules présentant une taille supérieure, ou inférieure respectivement, à la taille médiane. La taille médiane peut par exemple être évaluée à l'aide d'un granulomètre laser.

- Par « masse volumique relative » d'un produit, on entend le rapport égal à la masse volumique apparente divisée par la masse volumique absolue, exprimé en pourcentage.

- Par « masse volumique apparente » d'un produit, on entend classiquement le rapport égal à la masse dudit produit divisée par le volume qu'occupe ledit produit. Elle peut être mesurée par imbibition, selon le principe de la poussée d'Archimède.

- Par « masse volumique absolue » d'un produit, on entend classiquement la masse théorique dudit produit hors toute porosité. Elle peut être calculée à partir de données cristallographiques ou encore, par exemple également obtenue par le rapport égal à la masse de matière sèche dudit produit mesurée après un broyage à une finesse telle qu'il ne demeure sensiblement aucun pore fermé, divisée par le volume de cette masse après broyage. Elle peut donc être mesurée par pycnométrie à hélium.

Tous les pourcentages de la présente description sont des pourcentages en masse, sauf indication contraire.

Toutes les caractéristiques du liant et de la composition de moulage peuvent être mesurées conformément aux protocoles décrits pour les exemples.

Les verbes « contenir », « comprendre » et « présenter » doivent être interprétés de manière large, non limitative, sauf indication contraire.

## Brève description des dessins

D'autres caractéristiques et avantages de l'invention apparaîtront encore à la lecture de la description détaillée qui va suivre, et à l'examen du dessin annexé dans lequel

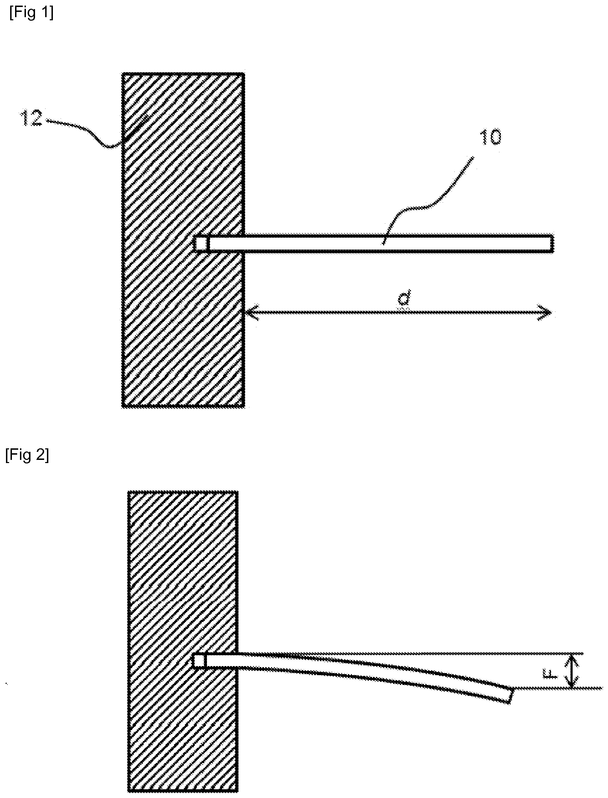

Les figures 1 et 2 représentent le montage d'une barrette de composition de moulage pour mesurer la déformation après un déliantage à l'aide d'un solvant ou un déliantage thermique, et le même montage après déliantage.

## Description détaillée

*Liant pour composition de moulage par injection*

Un liant pour composition de moulage par injection selon l'invention peut être fabriqué par un procédé de fabrication conventionnel, par simple mélange des composants (a), (b), optionnellement (c) et optionnellement (d), par exemple à température ambiante.

Ce mélange peut également être effectué lors de la réalisation de la composition de moulage.

**Le composant (a)** est la base polymérique et représente 35% à 60% de la masse du liant.

De préférence, la quantité de base polymérique est supérieure ou égale à 40%, de préférence supérieure ou égale à 45% et/ou inférieure ou égale à 55%, de préférence inférieure ou égale à 50% de la masse du liant.

La base polymérique consiste en un polymère ou un mélange de polymères non- amphiphiles et qui, à la différence du polymère ou du mélange de polymères de la cire, présentent chacun une masse molaire moyenne en masse supérieure ou égale à 5 000 g/mol.

Chaque constituante de la base polymérique présente de préférence une masse molaire moyenne en masse supérieure à 8 000 g/mol, de préférence supérieure à 1 0 000 g/mol, de préférence supérieure à 20 000 g/mol, de préférence supérieure à 30 000 g/mol.

En particulier, la base polymérique comporte de préférence un polymère, qui constitue de préférence le complément du SEBS dans la base polymérique, choisi parmi les polypropylènes, les polyéthylènes, les éthylène-acétates de vinyle, les éthylène-acrylates d'éthyle, les polystyrènes, les carbonates de polyéthylène, le phtalate de diéthyle, le phtalate de dioctyle, le phtalate de dibutyle, l'alcool polyvinylique, le polyacétate de vinyle, les copolymères d'éthylène et d'acide méthacrylique, le polychlorure de vinyle, le polybutyral vinylique, un polyacétal, un polyméthacrylate de méthyle, un polybutyl méthacrylate, un copolymère d'ester d'acide méthacrylique, un méthyléthylcétone, les résines, de préférence les résines acryliques, les résines cétoniques et leurs mélanges, et leurs mélanges.

De préférence, les polymères de la base polymérique qui constituent le complément du SEBS dans la base polymérique, sont choisis parmi les polypropylènes, les polyéthylènes, les éthylène-acétates de vinyle, les éthylène-acrylates d'éthyle, les polystyrènes, les carbonates de polyéthylène, le polychlorure de vinyle, les résines acryliques et leurs mélanges.

De préférence, en complément du SEBS, la base polymérique comporte, de préférence consiste en, un mélange de polypropylène et de polyéthylène, de préférence en un rapport massique polypropylène/polyéthylène supérieur à 25/75, de préférence supérieur à 30/70 et inférieur à 50/50. Le polyéthylène est de préférence un polyéthylène haute densité.

Selon l'invention, la base polymérique comporte 2% à 15% d'un SEBS, en pourcentage massique sur la base de la masse du liant. De préférence, la teneur en SEBS est supérieure ou égale à 3%, de préférence supérieure ou égale à 4% et/ou inférieure ou égale à 13%, de préférence inférieure ou égale à 11%, voire inférieure ou égale à 9%, voire inférieure ou égale à 7%.

Selon l'invention, la teneur massique en styrène dans le SEBS est supérieure à 15%, en pourcentages massiques sur la base de la masse dudit SEBS. De préférence, la teneur en styrène dans le SEBS est supérieure à 20%, de préférence supérieure à 25%, et/ou de préférence inférieure à 60%, de préférence inférieure à 58%, en pourcentages massiques sur la base de la masse dudit SEBS.

Selon l'invention également, la masse molaire moyenne en masse du SEBS est supérieure à 100 000 g/mol. De préférence, la masse molaire moyenne en masse du SEBS est supérieure à 130 000 g/mol, de préférence supérieure à 160 000 g/mol, de préférence supérieure à 200 000 g/mol, et/ou de préférence inférieure à 400 000 g/mol, de préférence inférieure à 350 000 g/mol.

**Le composant (b)** est la cire et représente 30% à 55% de la masse du liant.

De préférence, la quantité de cire est supérieure ou égale à 35%, de préférence supérieure ou égale à 40%, de préférence supérieure ou égale à 45% et/ou inférieure ou égale à 53%, de préférence inférieure ou égale à 50% de la masse du liant.

Un constituant de la cire, de préférence chaque constituant de la cire, présente de préférence une masse molaire moyenne en masse inférieure à 4000 g/mol, de préférence inférieure à 3 000 g/mol, de préférence inférieure à 2 000 g/mol, de préférence inférieure à 1 500 g/mol et/ou supérieure à 400 g/mol, de préférence supérieure à 500 g/mol.

En particulier, la cire peut comprendre, voire être constituée par un polymère choisi parmi la cire de carnauba, une cire de paraffine, une cire d'abeilles, une cire de polyéthylène, une cire microcristalline, une huile végétale, une huile d'arachide, une huile minérale, la glycérine et leurs mélanges, de préférence une cire de paraffine.

De préférence, la cire consiste en une polyoléfine ou un mélange de polyoléfines non-amphiphiles et qui présentent chacune une masse molaire moyenne en masse inférieure à 5 000 g/mol, de préférence inférieure à 4 000 g/mol, de préférence inférieure à 3 000 g/mol, de préférence inférieure à 2 000 g/mol, de préférence inférieure à 1 500 g/mol et/ou supérieure à 400 g/mol, de préférence supérieure à 500 g/mol.

Les constituants de la cire, notamment les polyoléfines, peuvent être fonctionnalisés ou non.

Le point de fusion de la cire est de préférence supérieur à 40°C, de préférence supérieur à 45°C et/ou de préférence inférieur à 110°C, de préférence inférieur à 100°C, de préférence inférieur à 90°C.

**Le composant (c)** est le surfactant et représente moins de 10% de la masse du liant.

De préférence, la quantité de surfactant est supérieure ou égale à 0,5%, de préférence supérieure ou égale à 1%, de préférence supérieure ou égale à 2% et/ou inférieure ou égale à 9%, de préférence inférieure ou égale à 8%, de préférence inférieure ou égale à 6%, de préférence inférieure ou égale à 5%, de préférence inférieure ou égale à 4% de la masse du liant.

Le surfactant consiste en un constituant ou un mélange de constituants amphiphiles. Chaque constituant amphiphile du surfactant présente de préférence une masse molaire moyenne en masse inférieure à 1 000 g/mol, de préférence inférieure à 800 g/mol, de préférence inférieure à 500 g/mol.

En particulier, le surfactant comporte, voire est constitué par un constituant amphiphile choisi parmi un éthylène-bis-stéaramide, la stéarine, l'acide palmitique, le stéarate de butyle, l'acide borique, l'acide oléique, l'acide laurique, l'acide stéarique et leurs mélanges, de préférence parmi un éthylène-bis-stéaramide, l'acide stéarique et leurs mélanges.

Dans un mode de réalisation, le surfactant comprend de l'acide stéarique et/ou un éthylène-bis-stéaramide, de préférence dans un rapport massique acide stéarique / éthylène-bis-stéaramide supérieur à 0,8, de préférence supérieur à 0,9 et inférieur à 1,2, de préférence inférieur à 1,1.

Dans un mode de réalisation préféré, le surfactant est constitué par un constituant amphiphile choisi parmi un éthylène-bis-stéaramide, l'acide stéarique et leurs mélanges, de préférence le surfactant est l'acide stéarique.

**Les autres composants (d)** sont tous les composants, optionnels, qui ne sont pas des composants (a), (b) ou (c). Ils représentent moins de 10%.

De préférence, plus de 80%, de préférence plus de 90%, de préférence plus de 92%, de préférence plus de 95%, de préférence plus de 97%, de préférence plus de 99%, de préférence plus de 99,5%, de préférence plus de 99,9% en masse des autres composants (d) sont des composants organiques.

De préférence, la quantité des autres composants (d) est inférieure ou égale à 8%, de préférence inférieure ou égale à 6%, de préférence inférieure ou égale à 5%, de préférence inférieure ou égale à 4%, de préférence inférieure ou égale à 3% de la masse du liant.

Dans un mode de réalisation, la quantité des autres composants (d) est supérieure ou égale à 0,5%, de préférence supérieure ou égale à 1% et inférieure ou égale à 8%, de préférence inférieure ou égale à 6%, de préférence inférieure ou égale à 5%, de préférence inférieure ou égale à 4%, de préférence inférieure ou égale à 3% de la masse du liant.

De préférence, dans ce mode de réalisation, les autres composants sont choisis parmi les composés permettant de ralentir, retarder voire supprimer la dégradation des composants (a) et/ou (b) et/ou (c) du liant sous l'action de la chaleur, de la lumière, de l'humidité et/ou de l'oxygène. Ces composants sont classiquement appelés stabilisants. Un stabilisant permettant de ralentir, retarder voire supprimer la dégradation des composants (a) et/ou (b) et/ou (c) du liant sous l'action de la chaleur, sous l'action de la lumière, sous l'action de l'oxygène est classiquement appelé stabilisant thermique, stabilisant lumière, antioxydant, respectivement. De préférence lesdits stabilisants sont choisis parmi les stéarates d'aluminium, de zinc, de plomb, de sodium, de cadmium, de magnésium, de calcium, de baryum et leurs mélanges, les laurates de baryum, de cadmium, d'étain et leurs mélanges, les maléates de magnésium, de sodium et leurs mélanges, les phtalates de magnésium, de sodium et leurs mélanges, les naphténates de magnésium, de sodium et leurs mélanges, des huiles époxydées de soja, de ricin et leurs mélanges, les amines aliphatiques, les composés phénoliques encombrés, les phosphites organiques, les mercaptans, les hydroxytoluènes butylés, les hydroxyanisoles butylés, le pentaerythritol tetrakis(3,5-di-tert-butyl-4-hydroxyhydrocinnamate), et leurs mélanges. De préférence le stabilisant est le pentaerythritol tetrakis(3,5-di-tert-butyl-4-hydroxyhydrocinnamate). La présence de stabilisants de mise en oeuvre, en particulier de composants agissant comme antioxydant permet avantageusement d'augmenter la durée de conservation du liant.

Dans un mode de réalisation préféré, le liant selon l'invention présente, en pourcentages massiques sur la base du liant :

- une quantité de base polymérique supérieure ou égale à 40%, de préférence supérieure ou égale à 45% et inférieure ou égale à 55%, de préférence inférieure ou égale à 50%, et
- une quantité de cire supérieure ou égale à 35%, de préférence supérieure ou égale à 40%, de préférence supérieure ou égale à 45% et inférieure ou égale à 53%, de préférence inférieure ou égale à 50%, et
- une quantité de surfactant supérieure ou égale à 0,5%, de préférence supérieure ou égale à 1%, de préférence supérieure ou égale à 2% et inférieure ou égale à 9%, de préférence inférieure ou égale à 8%, de préférence inférieure ou égale à 6%, de préférence inférieure ou égale à 5%, de préférence inférieure ou égale à 4%, et
- une quantité d'autres composants, de préférence un stabilisant, supérieure ou égale à 0,5%, de préférence supérieure ou égale à 1% et inférieure ou égale à 8%, de préférence inférieure ou égale à 6%, de préférence inférieure ou égale à 5%, de préférence inférieure ou égale à 4%, de préférence inférieure ou égale à 3%.

*Composition de moulage par injection*

Une composition de moulage par injection selon l'invention peut être fabriquée par un procédé de fabrication conventionnel, pourvu que le liant soit un liant selon l'invention.

La quantité de liant est comprise entre 30% et 65%, en pourcentages volumiques sur la base du volume de la composition de moulage.

De préférence, la quantité de liant est supérieure ou égale à 35%, de préférence supérieure ou égale à 40%, de préférence supérieure ou égale à 45% et/ou inférieure ou égale à 60%, de préférence inférieure ou égale à 55%, en pourcentages en volume sur la base du volume de la composition de moulage. Avantageusement, l'homogénéité de la pièce frittée obtenue à l'issue de l'étape D) en est améliorée et le moulage par injection réalisé à l'étape B) en est facilité.

Le complément à 100% est constitué de préférence pour plus de 90%, de préférence pour plus de 95%, de préférence pour plus de 98%, de préférence pour plus de 99%, de préférence pour plus de 99,9% en masse, par une poudre céramique.

De préférence, la poudre céramique comporte plus de 90%, de préférence plus de 95%, de préférence plus de 98%, de préférence plus de 99% en masse, de nitrure(s) et/ou de carbure(s) et/ou d'oxyde(s).

De préférence, le ou les nitrures sont choisis parmi AIN, $Si_3N_4$, $Si_2ON_2$, BN, TiN, GaN et leurs mélanges.

De préférence, le ou les carbures sont choisis parmi TiC, TaC, SiC, WC, ZrC, $B_4C$ et leurs mélanges.

De préférence, le ou les oxydes sont choisis parmi $ZrO_2$, $Y_2O_3$, $CeO_2$, CaO, MgO, $Sc_2O_3$, $TiO_2$, $Al_2O_3$, $La_2O_3$, $Nd_2O_3$, $Yb_2O_3$ et leurs mélanges.

De préférence, la poudre céramique est une poudre comportant plus de 90%, de préférence plus de 95%, de préférence plus de 98%, de préférence plus de 99% en masse d'oxydes, lesdits oxydes étant de préférence choisis parmi $ZrO_2$, $Y_2O_3$, $CeO_2$, CaO, MgO, les oxydes de manganèse, ZnO, les oxydes de praséodyme, les oxydes de cuivre, BaO, les oxydes de fer, $Sc_2O_3$, $TiO_2$, $Al_2O_3$, $La_2O_3$, $Nd_2O_3$, $Yb_2O_3$ et leurs mélanges, de préférence choisis parmi $ZrO_2$, $Y_2O_3$, $CeO_2$, $Al_2O_3$ et leurs mélanges.

Dans un premier mode de réalisation, la poudre céramique présente l'analyse chimique suivante, en pourcentages en masse sur la base des oxydes :

- $ZrO_2$ partiellement stabilisée avec $CeO_2$ et $Y_2O_3$ : complément à 100%,
- $Al_2O_3$ : 3 - 22%
- $CaO$ + oxydes de manganèse exprimé sous la forme $MnO$ + $ZnO$ + $La_2O_3$ + oxydes de praséodyme exprimé sous la forme $Pr_6O_{11}$ + $SrO$ + oxydes de cuivre exprimé sous la forme $CuO$ + $Nd_2O_3$ + $BaO$+ oxydes de fer exprimé sous la forme $Fe_2O_3$ : 0,2 - 6%,
- Oxydes autres que $ZrO_2$, $Al_2O_3$, $Y_2O_3$, $CeO_2$, $CaO$, les oxydes de manganèse, $ZnO$, $La_2O_3$, les oxydes de praséodyme, $SrO$, les oxydes de cuivre, $Nd_2O_3$, $BaO$, les oxydes de fer : < 2%,

  $CeO_2$ et $Y_2O_3$ étant présents en des quantités telles que, en pourcentages molaires sur la base de la somme de $ZrO_2$, $CeO_2$ et $Y_2O_3$,
  $CeO_2$ : 2,5 - 6,5 mol% et
  $Y_2O_3$ : 0,5 - 2 mol%,
  pourvu que, si $Al_2O_3$ < 10%, la formule (1) suivante soit respectée :

  $$CeO_2 > -0,57.Al_2O_3 + 8,2, \qquad (1)$$

  $CeO_2$ étant exprimé en pourcentage molaire sur la base de la somme de $ZrO_2$, $CeO_2$ et $Y_2O_3$, et $Al_2O_3$ étant exprimé en pourcentage massique sur la base de la masse du produit,

Dans un deuxième mode de réalisation, la poudre céramique présente l'analyse chimique suivante, en pourcentages en masse sur la base des oxydes :

- $ZrO_2$ partiellement stabilisée avec $CeO_2$ et $Y_2O_3$ : complément à 100%,
- $Al_2O_3$: 10 - 60%
- $CaO$ + oxydes de manganèse exprimé sous la forme $MnO$ + $ZnO$ + $La_2O_3$ + oxydes de praséodyme exprimé sous la forme $Pr_6O_{11}$ + $SrO$ + oxydes de cuivre exprimé sous la forme $CuO$ + $Nd_2O_3$ + $BaO$+ oxydes de fer exprimé sous la forme $Fe_2O_3$ : 0,2 - 6%,
- $CaO \leq 2\%$
- Oxydes autres que $ZrO_2$, $Al_2O_3$, $Y_2O_3$, $CeO_2$, $CaO$, les oxydes de manganèse, $ZnO$, $La_2O_3$, les oxydes de praséodyme, $SrO$, les oxydes de cuivre, $Nd_2O_3$, $BaO$, les oxydes de fer : < 2%,

  $CeO_2$ et $Y_2O_3$ étant présents en des quantités telles que, en pourcentages molaires sur la base de la somme de $ZrO_2$, $CeO_2$ et $Y_2O_3$,
  $CeO_2$ : 6 - 11 mol% et
  $Y_2O_3$ : 0,5 - 2 mol%.

De préférence, la poudre céramique présente une taille médiane inférieure à 2 $\mu$m, de préférence inférieure à 1 $\mu$m, de préférence inférieure à 0,8 $\mu$m, de préférence inférieure à 0,6 $\mu$m, de préférence inférieure à 0,5 $\mu$m, de préférence inférieure à 0,4 $\mu$m.
De préférence encore, la poudre céramique présente une humidité inférieure à 1,5%, de préférence inférieure à 1%, de préférence inférieure à 0,5%.

### Exemples

Les exemples non limitatifs suivants sont donnés dans le but d'illustrer l'invention.

### Protocoles de mesure

La **masse molaire moyenne en masse** des composants est déterminée par chromatographie d'exclusion stérique selon la norme ISO16014-4, sur un appareil Viscotek HT-GPC commercialisé par la société Malvern Panalytical, équipé d'une colonne PSS-Polefin combination medium commercialisée par la société PSS-Polymer.
Lors des mesures, la colonne et le détecteur du Viscotek HT-GPC sont à une température égale à 150°C.
Pour chaque composant dont la masse molaire est à déterminer, on prépare une solution de la manière suivante : ledit composant est introduit dans du 1,2,4-trichlorobenzene (solvant), de manière à obtenir une concentration en ledit composant égale à 5 mg/cm3. Lors de cette étape, le solvant est maintenu à une température égale à 150°C, et le composant est introduit dans le solvant sans agitation, avec un temps de dissolution égal à 1 heure. Du 2,6-di-tert-butyl-4-methylphenol est ensuite ajouté, en une quantité égale à 200 mg/l de solution, pour éviter la dégradation du composant. La température de la solution est maintenue à 150°C jusqu'à la mesure.

Chaque solution est injectée à un débit égal à 1 ml/min.

Pour tous les composants à l'exception des SEBS, la calibration de la colonne est réalisée à l'aide des références en polyéthylène PSS-pekit commercialisé par la société PSS-Polymer. Pour les SEBS, la calibration de la colonne est réalisée à l'aide des références en polystyrène High Température PSS-pskitr10ht commercialisé par la société PSS-Polymer.

Le logiciel Omnisec Software commercialisé par la société Malvern Panalytical est utilisé pour le traitement des données et la mesure de la masse molaire moyenne en masse.

Pour chaque composant, la masse molaire moyenne en masse est la moyenne arithmétique de trois mesures.

La **teneur en styrène** du SEBS est déterminée par spectroscopie par résonance magnétique nucléaire (RMN) du proton selon la méthode suivante. Du SEBS est introduit dans du chloroforme à température ambiante en une quantité égale à 60 mg/ml de chloroforme. Le mélange est ensuite agité pendant 5 minutes à l'aide d'une plaque vibrante. Le mélange est ensuite analysé par RMN à proton à une fréquence de rotation égale à 500 Hz, sur une moyenne de 124 points de mesure. Le spectre RMN obtenu permet de déterminer la teneur massique de styrène, exprimée en pourcentage massique sur la base de la masse du SEBS.

Les méthodes de mesure suivantes permettent une excellente simulation du comportement réel lors de la fabrication de la pièce frittée.

La **déformation après un déliantage à l'aide d'un solvant** est mesurée de la manière suivante :

Un liant et une poudre CZ3Y commercialisée par Saint-Gobain Zirpro sont introduits dans un mélangeur Haake Rheomix commercialisé par la société Thermo Fisher Scientific. La quantité de liant et la quantité de poudre CY3Z sont égales à 50% en volume, sur la base de la somme du volume de liant et de poudre CY3Z, respectivement. Le liant et la poudre CY3Z sont ensuite mélangés pendant 45 minutes, à une vitesse égale à 30 tr/minutes, la température dans le mélangeur étant portée à 180°C, le mélange étant maintenu 10 minutes à cette température, de manière à obtenir la composition de moulage par injection. Après refroidissement, la composition de moulage par injection durcie est broyée de manière à passer à travers les mailles carrées d'un tamis d'ouverture égale à 2 mm afin qu'elle se présente sous la forme de granulés. La composition de moulage par injection ainsi obtenue est ensuite injectée, au moyen d'une presse à injecter *babyplast* commercialisée par la société Martiplast, à une pression égale à 100 bar, à une température, mesurée dans la vis d'injection, égale à 170°C, dans un moule de barrette à une température égale à 40°C et conformé de manière à obtenir une barrette de dimensions égales à 75 mm x 13 mm x 2 mm après démoulage. 5 barrettes sont réalisées pour chaque composition de moulage à caractériser.

Comme représenté sur la figure 1, une des extrémités de chaque barrette 10 est ensuite encastrée sur une longueur égale à 5 mm dans un support 12 en alumine. Chaque barrette présente donc une longueur en porte à faux d égale à 70 mm. L'ensemble barrettes-support est ensuite placé sur une grille métallique, le tout étant disposé dans un récipient en verre, ledit récipient en verre étant disposé dans un bain chauffant thermostaté à température ambiante. De l'isopropanol est ensuite introduit dans le récipient en verre de manière à recouvrir entièrement les barrettes. Le récipient en verre est ensuite fermé. L'isopropanol est ensuite porté à une température égale à 60°C grâce à l'action du bain chauffant thermostaté. Cette température est maintenue pendant 24 heures, en veillant à ce que l'isopropanol recouvre entièrement les barrettes tout au long de cette période. Le bain chauffant thermostaté est ensuite coupé et l'isopropanol est évacué du récipient en verre lorsque sa température atteint 55°C. Le récipient en verre est ensuite ouvert, l'ensemble barrettes-support est récupéré et est ensuite séché pendant 24 heures à température ambiante, les barrettes restant encastrées dans le support pendant cette période.

La déformation de la barrette est ensuite mesurée par la flèche F telle que décrite dans la figure 2. Une moyenne de la déformation des 5 barrettes est effectuée pour chaque composition de moulage testée.

La **déformation après un déliantage thermique** est mesurée de la manière suivante.

Des barrettes sont réalisées selon le même protocole de fabrication que celui décrit précédemment pour la mesure de la déformation lors du déliantage à l'aide d'un solvant. 5 barrettes sont réalisées pour chaque composition de moulage à caractériser.

Puis, les barrettes sont placées à plat sur une grille métallique ajourée, le tout étant disposé dans un récipient en verre, ledit récipient en verre étant disposé dans un bain chauffant thermostaté à température ambiante. De l'isopropanol est ensuite introduit dans le récipient en verre de manière à recouvrir entièrement les barrettes. Le récipient en verre est ensuite fermé. L'isopropanol est ensuite porté à une température égale à 60°C grâce à l'action du bain chauffant thermostaté. Cette température est maintenue pendant 24 heures, en veillant à ce que l'isopropanol recouvre entièrement les barrettes tout au long de cette période. Le bain chauffant thermostaté est ensuite coupé et l'isopropanol est évacué du récipient en verre lorsque sa température atteint 55°C. Le récipient en verre est ensuite ouvert, Les barrettes sont récupérées et est ensuite séchées pendant 24 heures à température ambiante. Cette procédure permet d'obtenir, après déliantage à l'aide d'un solvant, des barrettes non déformées.

Comme représenté sur la figure 1, une des extrémités de chaque barrette 10 est ensuite encastrée sur une longueur égale à 15 mm dans un support en alumine 12. Chaque barrette présente donc une longueur en porte à faux d égale à 60 mm. L'ensemble barrettes-support est ensuite placé dans un four électrique et subit le cycle de déliantage thermique suivant :

- montée de la température ambiante jusqu'à 150°C à une vitesse égale à 30°C/h,
- montée de 150°C à 350°C, à une vitesse égale à 15°C/h,
- maintien à 350°C pendant 3 heures,
- montée de 350°C à 550°C, à une vitesse égale à 9°C/h,
- maintien à 550°C pendant 1 heure,
- montée de 550°C à 820°C, à une vitesse égale à 180°C/h,
- montée de 820°C à 1 000°C, à une vitesse égale à 150°C/h,
- descente à la température ambiante.

La déformation des barrettes après déliantage thermique est ensuite mesurée par la flèche F telle que décrite dans la figure 2. Une moyenne de la déformation des 5 barrettes est effectuée pour chaque composition de moulage testée.

Protocole de fabrication

Des barrettes de composition de moulage à tester ont été réalisées à l'aide du procédé décrit pour la fabrication des barrettes nécessaires à la mesure de la déformation lors du déliantage à l'aide d'un solvant et du déliantage thermique.
Les produits suivants ont été utilisés pour les différentes compositions de liants :

- une poudre de polypropylène présentant une masse molaire moyenne en masse égale à 135 060 g/mol, ladite poudre présentant une taille médiane égale à 1 mm,
- une poudre de polyéthylène haute densité présentant une masse molaire moyenne en masse égale à 38 000 g/mol, ladite poudre présentant une taille médiane égale à 1 mm,
- une poudre de SEBS Kraton® A1535 H, commercialisé par la société Kraton, présentant une teneur massique en styrène égale à 56% et une masse molaire moyenne en masse égale à 236 350 g/mol,
- une poudre de SEBS Kraton® G1650 E, commercialisé par la société Kraton, présentant une teneur massique en styrène égale à 30% et une masse molaire moyenne en masse égale à 80 230 g/mol,
- une poudre de SEBS Kraton® G1657 V, commercialisé par la société Kraton, présentant une teneur massique en styrène égale à 13% et une masse molaire moyenne en masse égale à 110 610 g/mol,
- une poudre de SEBS présentant une teneur massique en styrène égale à 21% et une masse molaire moyenne en masse égale à 108 660 g/mol,
- une poudre de cire de paraffine présentant une masse molaire moyenne en masse égale à 577 g/mol, un point de fusion égal à 55°C, ladite poudre présentant une taille médiane égale à 1 mm,
- une poudre de résine acrylique Elvacite® 2045 commercialisée par la société Lucite International, présentant une masse molaire moyenne en masse égale à 127 340 g/mol,
- une poudre d'acide stéarique de pureté supérieure à 98% en masse, commercialisée par la société Sigma-Aldrich,
- une poudre d'antioxydant Irganox 1010 commercialisée par la société Sigma-Aldrich.

Les compositions des liants utilisés dans les exemples, ainsi que les caractérisations effectuées sur les compositions de moulage sont décrites dans le tableau 1 suivant, la masse volumique absolue des produits des exemples 1 à 9 étant fixée à 6,095 g/cm$^3$ après frittage, ledit frittage étant réalisé sur des barrettes ayant subi un déliantage à l'aide d'un solvant et un déliantage thermique tels que décrits précédemment, suivi d'un frittage en four électrique selon le cycle thermique suivant :

- montée de la température ambiante jusqu'à 500°C à une vitesse égale à 100°C/h,
- maintien à 500°C pendant 2 heures,
- montée de 500°C à 1 450°C, à une vitesse égale à 100°C/h,
- maintien à 1 450°C pendant 2 heures,
- descente à la température ambiante.

[Tableau 1]

| | | Ex. 1 (*) | Ex. 2 | Ex. 3 (*) | Ex. | Ex. | Ex. 6 (*) | Ex. 7 | Ex. 8 | Ex. 9 |
|---|---|---|---|---|---|---|---|---|---|---|
| **Constituants du liant, en pourcentages massiques** | | | | | | | | | | |
| Base polymérique (a) | Poudre de polypropylène | 65 | 10,7 | 10,7 | 10,7 | 13,5 | 8,7 | 12,6 | 9,6 | 10,7 |
| | Poudre de polyéthylène | 0 | 25,0 | 25,0 | 25,0 | 31,6 | 20,4 | 29,5 | 22,5 | 25,0 |
| | Poudre de SEBS Kraton® A 1535 H | 0 | 10,4 | 0 | 0 | 1 | 17 | 4 | 14 | 0 |
| | Poudre de SEBS Kraton G1650 E | 0 | 0 | 10,4 | 0 | 0 | 0 | 0 | 0 | 0 |
| | Poudre de SEBS Kraton G1657 V | 0 | 0 | 0 | 10,4 | 0 | 0 | 0 | 0 | 0 |
| | Poudre de SEBS présentant une teneur en styrène égale à 21% et une masse molaire moyenne en masse égale à 108 660 g/mol | 0 | 0 | 0 | 0 | 0 | 0 | 0 | 0 | 10,4 |
| | Résine acrylique Elvacite® 2045 | 0 | 3,1 | 3,1 | 3,1 | 3,1 | 3,1 | 3,1 | 3,1 | 3,1 |
| Cire (b) | Cire de paraffine | 30 | 46,2 | 46,2 | 46,2 | 46,2 | 46,2 | 46,2 | 46,2 | 46,2 |
| Surfactant (c) | Acide stéarique | 5 | 3,5 | 3,5 | 3,5 | 3,5 | 3,5 | 3,5 | 3,5 | 3,5 |
| Autres composants (d) | antioxydant Irganox 1010 | 0 | 1,1 | 1,1 | 1,1 | 1,1 | 1,1 | 1,1 | 1,1 | 1,1 |
| **Caractéristiques de la composition de moulage après mise en forme** | | | | | | | | | | |
| Déformation après un déliantage à l'aide d'un solvant - mesure de la flèche F (mm) | | 14,1 | 8,1 | 16,7 | 14,6 | 9,4 | 10 | 10,4 | 12 | 11,5 |
| Déformation après un déliantage thermique - mesure de la flèche F (mm) | | 6,1 | 7 | 13 | 8 | Barrettes cassées | 7 | 7 | 7,5 | 8,1 |
| Masse volumique apparente après frittage (g/cm$^3$) | | 6,01 | 6,06 | 6,04 | 6,05 | n.d. | 6,00 | 6,06 | 6,07 | 6,07 |
| Masse volumique relative après frittage (%) | | 98,61 | 99,43 | 99,10 | 99,26 | n.d. | 98,44 | 99,43 | 99,59 | 99,59 |
| (*) : exemple hors invention ; n.d. : non déterminé | | | | | | | | | | |

EP 4 161 717 B1

Une comparaison de l'exemple comparatif 1 et de l'exemple 2 selon l'invention montre l'impact décisif, sur la déformation après un déliantage à l'aide d'un solvant et sur la masse volumique relative après frittage, de la présence d'un SEBS, dans les quantités revendiquées, dans le liant.

Une comparaison de l'exemple 2 selon l'invention et de l'exemple 3 comparatif obtenu avec un liant comportant un SEBS présentant une masse molaire moyenne en masse inférieure à l'objet de l'invention, montre l'impact décisif, sur la déformation après un déliantage à l'aide d'un solvant, sur la déformation après un déliantage thermique, ainsi que sur la masse volumique relative après frittage, d'un SEBS présentant une masse molaire moyenne en masse supérieure à 100 000 g/mol.

Une comparaison de l'exemple 2 selon l'invention et de l'exemple 4 comparatif obtenu avec un liant comportant un SEBS présentant une trop faible teneur massique en styrène par rapport à la présente invention, montre l'impact décisif, sur la déformation après un déliantage à l'aide d'un solvant, d'un SEBS présentant une teneur massique en styrène supérieure à 15%, en pourcentage massique sur la base de la masse dudit SEBS.

Une comparaison de l'exemple 2 selon l'invention et de l'exemple 5 comparatif obtenu avec un liant comportant une trop faible quantité de SEBS par rapport à la présente invention, montre l'impact décisif sur la masse volumique relative après frittage, d'une teneur minimale de 2% de SEBS dans le liant : la masse volumique relative de l'exemple 5 n'a pas été déterminée car celui-ci présentait des fissures rédhibitoires.

Une comparaison de l'exemple 2 selon l'invention et de l'exemple 6 comparatif obtenu avec un liant comportant une quantité trop importante de SEBS par rapport à la présente invention, montre l'impact décisif, sur la déformation après un déliantage à l'aide d'un solvant et sur la masse volumique relative après frittage, d'une teneur maximale de 15% de SEBS dans le liant.

Les exemples 7, 8 et 9 illustrent également l'invention et ses avantages.

Comme cela apparaît clairement à présent, l'invention permet de limiter la déformation de la préforme à l'étape C), tout en conduisant à une pièce frittée présentant une masse volumique relative élevée.

Bien entendu, l'invention n'est pas limitée aux modes de réalisation décrits, fournis à des fins d'illustration seulement.

## Revendications

1. Liant pour composition de moulage par injection, ledit liant consistant en, en pourcentages massiques et pour un total de 100% :

   - 35% à 60% d'un composant (a), ou «base polymérique», consistant en un polymère ou un mélange de polymères, chaque dit polymère étant non-amphiphile et présentant une masse molaire moyenne en masse supérieure ou égale à 5 000 g/mol,
   - 30% à 55% d'un composant (b), ou «cire», consistant en un polymère ou un mélange de polymères, chaque dit polymère étant non-amphiphile et présentant une masse molaire moyenne en masse inférieure à 5 000 g/mol, et
   - moins de 10% d'un composant amphiphile (c), ou «surfactant», et
   - moins de 10% d'autres composants (d),

   la base polymérique comportant 2% à 15% d'un copolymère de styrène/éthylène - butylène/styrène, ou « SEBS », en pourcentages massiques sur la base de la masse du liant, la teneur massique en styrène dans le SEBS étant supérieure à 15%, en pourcentage massique sur la base de la masse dudit SEBS, la masse molaire moyenne en masse dudit SEBS étant supérieure à 100 000 g/mol.

2. Liant selon la revendication 1, dans lequel la teneur en SEBS est supérieure ou égale à 4% et inférieure ou égale à 13%, en pourcentage massique sur la base de la masse du liant.

3. Liant selon l'une quelconque des revendications précédentes, dans lequel la teneur en styrène dans le SEBS est supérieure à 20% et inférieure à 60%, en pourcentage massique sur la base de la masse dudit SEBS.

4. Liant selon la revendication immédiatement précédente, dans lequel la teneur en styrène dans le SEBS est supérieure à 25%, en pourcentage massique sur la base de la masse dudit SEBS.

5. Liant selon l'une quelconque des revendications précédentes, dans lequel la masse molaire moyenne en masse du SEBS est supérieure à 160 000 g/mol et inférieure à 400 000 g/mol.

**6.** Liant selon l'une quelconque des revendications précédentes, dans lequel la quantité de surfactant est supérieure ou égale à 0,5%.

**7.** Liant selon l'une quelconque des revendications précédentes, présentant, en pourcentages massiques sur la base du liant :

- une quantité de base polymérique supérieure ou égale à 40% et inférieure ou égale à 55%, et
- une quantité de cire supérieure ou égale à 35% et inférieure ou égale à 53%, et
- une quantité de surfactant supérieure ou égale à 1% et inférieure ou égale à 8%, et
- une quantité d'autres composants, de préférence un stabilisant supérieure ou égale à 0,5% et inférieure ou égale à 8%.

**8.** Liant selon la revendication immédiatement précédente, présentant, en pourcentages massiques sur la base du liant :

- une quantité de base polymérique supérieure ou égale à 45% et inférieure ou égale à 50%, et
- une quantité de cire supérieure ou égale à 40% et inférieure ou égale à 50%, et
- une quantité de surfactant supérieure ou égale à 2% et inférieure ou égale à 6%, et
- une quantité d'autres composants, de préférence un stabilisant supérieure ou égale à 1% et inférieure ou égale à 4%.

**9.** Liant selon l'une quelconque des revendications précédentes, présentant au moins une des caractéristiques suivantes:

- chaque constituant de la base polymérique présente une masse molaire moyenne en masse supérieure à 20 000 g/mol,
- un constituant de la cire, de préférence chaque constituant de la cire présente une masse molaire moyenne en masse supérieure à 400 g/mol et inférieure à 3 000 g/mol,
- chaque constituant du surfactant présente une masse molaire moyenne en masse inférieure à 800 g/mol.

**10.** Liant selon la revendication immédiatement précédente, présentant au moins une des caractéristiques suivantes :

- chaque constituant de la base polymérique présente une masse molaire moyenne en masse supérieure à 30 000 g/mol,
- un constituant de la cire, de préférence chaque constituant de la cire présente une masse molaire moyenne en masse inférieure à 1 500 g/mol,
- chaque constituant du surfactant présente une masse molaire moyenne en masse inférieure à 500 g/mol.

**11.** Liant selon l'une quelconque des revendications précédentes, présentant au moins une des caractéristiques suivantes :

- la base polymérique comporte un polymère choisi parmi les polypropylènes, les polyéthylènes, les éthylène-acétates de vinyle, les éthylène-acrylates d'éthyle, les polystyrènes, les carbonates de polyéthylène, le phtalate de diéthyle, le phtalate de dioctyle, le phtalate de dibutyle, l'alcool polyvinylique, le polyacétate de vinyle, les copolymères d'éthylène et d'acide méthacrylique, le polychlorure de vinyle, le polybutyral vinylique, un polyacétal, un polyméthacrylate de méthyle, un polybutyl méthacrylate, un copolymère d'ester d'acide méthacrylique, un méthyléthylcétone, les résines, et leurs mélanges,
- la cire comporte, voire est constituée par une cire choisie parmi la cire de carnauba, une cire de paraffine, une cire d'abeilles, une cire de polyéthylène, une cire microcristalline, une huile végétale, une huile d'arachide, une huile minérale, la glycérine et leurs mélanges, de préférence une cire de paraffine,
- le surfactant comporte, voire est constitué par un constituant amphiphile choisi parmi un éthylène-bis-stéaramide, la stéarine, l'acide palmitique, le stéarate de butyle, l'acide borique, l'acide oléique, l'acide laurique, l'acide stéarique et leurs mélanges.

**12.** Liant selon l'une quelconque des revendications précédentes, présentant au moins une des caractéristiques suivantes :

- la base polymérique comporte un mélange de polypropylène et de polyéthylène en un rapport massique polypropylène / polyéthylène supérieur à 25/75 et inférieur à 50/50,

- le surfactant est constitué par un constituant amphiphile choisi parmi un éthylène-bis-stéaramide, l'acide stéarique et leurs mélanges.

13. Composition de moulage par injection comportant entre 30% et 65% d'un liant selon l'une quelconque des revendications précédentes, en pourcentage volumique sur la base du volume de la composition de moulage, le complément étant pour plus de 90% en masse une poudre céramique.

14. Composition de moulage selon la revendication immédiatement précédente, présentant au moins une des caractéristiques suivantes :

- la quantité de liant est supérieure ou égale à 45% et inférieure ou égale à 55%, en pourcentage en volume sur la base du volume de la composition de moulage,
- la poudre céramique comporte plus de 90% en masse de nitrure(s) et/ou de carbure(s) et/ou d'oxyde(s).

15. Composition de moulage selon la revendication immédiatement précédente, dans laquelle lesdits oxydes sont choisis parmi $ZrO_2$, $Y_2O_3$, $CeO_2$, CaO, MgO, les oxydes de manganèse, ZnO, les oxydes de praséodyme, les oxydes de cuivre, BaO, les oxydes de fer, $Sc_2O_3$, $TiO_2$, $Al_2O_3$, $La_2O_3$, $Nd_2O_3$, $Yb_2O_3$, et leurs mélanges.

16. Procédé de fabrication d'une pièce frittée, ledit procédé comportant les étapes suivantes :

A) élaboration d'une composition de moulage,
B) moulage par injection de ladite composition de moulage, afin d'obtenir une préforme,
C) déliantage au moins en partie de la préforme,
D) frittage de la préforme au moins en partie déliantée afin d'obtenir une pièce frittée, la composition de moulage étant conforme à l'une quelconque des revendications 13 à 15.

**Patentansprüche**

1. Bindemittel für eine Spritzgusszusammensetzung, wobei das Bindemittel in Masseprozenten und bei einer Gesamtmenge von 100 % besteht aus:

- 35 % bis 60 % einer Komponente (a) oder "Polymerbasis", die aus einem Polymer oder einer Mischung von Polymeren besteht, wobei jedes der Polymere nicht amphiphil ist und ein gewichtsmittleres Molekulargewicht von größer als oder gleich 5 000 g/mol aufweist,
- 30 % bis 55 % einer Komponente (b) oder eines "Wachses", die/das aus einem Polymer oder einer Mischung von Polymeren besteht, wobei jedes der Polymere nicht amphiphil ist und ein gewichtsmittleres Molekulargewicht von weniger als 5 000 g/mol aufweist und
- weniger als 10 % einer amphiphilen Komponente (c) oder eines "Tensids" und
- weniger als 10 % anderer Komponenten (d),

wobei die Polymerbasis 2 % bis 15 % eines Styrol/Ethylen-Butylen/Styrol-Copolymers oder "SEBS" in Masseprozent, auf Basis der Masse des Bindemittels, umfasst, wobei der Massegehalt an Styrol in dem SEBS größer als 15 %, in Masseprozent auf Basis der Masse des SEBS, ist, das gewichtsmittlere Molekulargewicht des SEBS größer als 100 000 g/mol ist.

2. Bindemittel nach Anspruch 1, wobei der SEBS-Gehalt größer als oder gleich 4 % und kleiner als oder gleich 13 % ist, in Masseprozent auf Basis der Masse des Bindemittels.

3. Bindemittel nach einem der vorstehenden Ansprüche, wobei der Styrolgehalt in dem SEBS größer als 20 % und kleiner als 60 %, in Masseprozent auf Basis der Masse des SEBS, ist.

4. Bindemittel nach dem unmittelbar vorstehenden Anspruch, wobei der Styrolgehalt in dem SEBS größer als 25 %, in Masseprozent auf Basis der Masse des SEBS, ist.

5. Bindemittel nach einem der vorstehenden Ansprüche, wobei das gewichtsmittlere Molekulargewicht des SEBS größer als 160 000 g/mol und kleiner als 400 000 g/mol ist.

6. Bindemittel nach einem der vorstehenden Ansprüche, wobei die Menge an Tensid größer als oder gleich 0,5 % ist.

7. Bindemittel nach einem der vorstehenden Ansprüche, das in Masseprozent auf Basis auf Basis des Bindemittels aufweist:

   - eine Menge der Polymerbasis, die größer als oder gleich 40 % und kleiner als oder gleich 55 % ist, und
   - eine Wachsmenge, die größer als oder gleich 35 % oder kleiner als oder gleich 53 % ist, und
   - eine Menge des Tensids, die größer als oder gleich 1 % und kleiner als oder gleich 8 % ist, und
   - eine Menge an anderen Komponenten, vorzugsweise eines Stabilisators, die größer als oder gleich 0,5 % und kleiner als oder gleich 8 % ist.

8. Bindemittel nach dem unmittelbar vorstehenden Anspruch, das in Masseprozent auf Basis des Bindemittels aufweist:

   - eine Menge der Polymerbasis, die größer als oder gleich 45 % und kleiner als oder gleich 50 % ist, und
   - eine Wachsmenge, die größer als oder gleich 40 % oder kleiner als oder gleich 50 % ist, und
   - eine Menge des Tensids, die größer als oder gleich 2 % und kleiner als oder gleich 6 % ist, und
   - eine Menge an anderen Komponenten, vorzugsweise ein Stabilisator, die größer als oder gleich 1 % und kleiner als oder gleich 4 % ist.

9. Bindemittel nach einem der vorstehenden Ansprüche, das mindestens eines der folgenden Merkmale aufweist:

   - jeder Bestandteil der Polymerbasis weist ein gewichtsmittleres Molekulargewicht von mehr als 20 000 g/mol auf,
   - ein Bestandteil des Wachses, vorzugsweise jeder Bestandteil des Wachses, weist ein gewichtsmittleres Molekulargewicht von mehr als 400 g/mol und weniger als 3 000 g/mol auf, -jeder Bestandteil des Tensids weist ein gewichtsmittleres Molekulargewicht von weniger als 800 g/mol auf.

10. Bindemittel nach dem unmittelbar vorstehenden Anspruch, das mindestens eines der folgenden Merkmale aufweist:

   - jeder Bestandteil der Polymerbasis weist ein gewichtsmittleres Molekulargewicht von mehr als 30 000 g/mol auf,
   - ein Bestandteil des Wachses, vorzugsweise jeder Bestandteil des Wachses, weist ein gewichtsmittleres Molekulargewicht von weniger als 1 500 g/mol auf,
   - jeder Bestandteil des Tensids weist ein gewichtsmittleres Molekulargewicht von weniger als 500 g/mol auf.

11. Bindemittel nach einem der vorstehenden Ansprüche, das mindestens eines der folgenden Merkmale aufweist:

   - die Polymerbasis umfasst ein Polymer, das ausgewählt ist aus Polypropylenen, Polyethylenen, Ethylenvinylacetaten, Ethylenethylacrylaten, Polystyrolen, Polyethylencarbonaten, Diethylphthalat, Dioctylphthalat, Dibutylphthalat, Polyvinylalkohol, Polyvinylacetat, Ethylen- und Methacrylsäure-Copolymeren, Polyvinylchlorid, Polyvinylbutyral, Polyacetal, Polymethylmethacrylat, Polybutylmethacrylat, einem Methacrylsäureester-Copolymer, Methylethylketon, Harzen und Mischungen davon,
   - das Wachs umfasst ein Wachs oder besteht sogar aus einem Wachs, das ausgewählt ist aus Carnaubawachs, Paraffinwachs, Bienenwachs, Polyethylenwachs, mikrokristallinem Wachs, Pflanzenöl, Erdnussöl, Mineralöl, Glycerin und Mischungen davon, vorzugsweise Paraffinwachs,
   - das Tensid umfasst einen amphiphilen Bestandteil oder besteht aus diesem, der ausgewählt ist aus Ethylen-bis-stearamid, Stearin, Palmitinsäure, Butylstearat, Borsäure, Ölsäure, Laurinsäure, Stearinsäure und Mischungen davon.

12. Bindemittel nach einem der vorstehenden Ansprüche, das mindestens eines der folgenden Merkmale aufweist:

   - die Polymerbasis umfasst eine Mischung aus Polypropylen und Polyethylen in einem Massenverhältnis von Polypropylen/Polyethylen von mehr als 25/75 und weniger als 50/50,
   - das Tensid besteht aus einem amphiphilen Bestandteil, der ausgewählt ist aus Ethylen-bis-stearamid, Stearinsäure und Mischungen davon.

13. Spritzgusszusammensetzung, die zwischen 30 % und 65 % eines Bindemittels nach einem der vorstehenden Ansprüche, in Volumenprozent, auf Basis des Volumens der Formmasse, umfasst, wobei der Rest zu mehr als 90 Masse-% aus einem Keramikpulver besteht.

**14.** Formmasse nach dem unmittelbar vorstehenden Anspruch, die mindestens eines der folgenden Merkmale aufweist:

- die Menge des Bindemittels ist größer als oder gleich 45 % und kleiner als oder gleich 55 % ist, in Volumenprozent auf der Basis des Volumens der Formmasse,
- das Keramikpulver umfasst mehr als 90 Masse-% Nitrid(e) und/oder Carbid(e) und/oder Oxid(e).

**15.** Formmasse nach dem unmittelbar vorstehenden Anspruch, wobei die Oxide ausgewählt sind aus $ZrO_2$, $Y_2O_3$, $CeO_2$, CaO, MgO, Manganoxiden, ZnO, Praseodymoxiden, Kupferoxiden, BaO, Eisenoxiden, $Sc_2O_3$, $TiO_2$, $Al_2O_3$, $La_2O_3$, $Nd_2O_3$, $Yb_2O_3$ und Mischungen davon.

**16.** Verfahren zum Herstellen eines gesinterten Teils, wobei das Verfahren die folgenden Schritte umfasst:

A) Bearbeiten einer Formmasse,
B) Spritzgießen der Formmasse, um einen Vorformling zu erhalten, C) mindestens teilweises Entbindern des Vorformlings,
D) Sintern des mindestens teilweise entbinderten Vorformlings, um ein gesintertes Teil zu erhalten, wobei die Formmasse einem der Ansprüche 13 bis 15 entspricht.

**Claims**

**1.** A binder for an injection molding composition, said binder consisting of, in percentage by weight and for a total of 100%:

- 35% to 60% of a component (a), or "polymer base", consisting of a polymer or a mixture of polymers, each said polymer being non-amphiphilic and having a weight-average molar mass of greater than or equal to 5,000 g/mol,
- 30% to 55% of a component (b), or "wax", consisting of a polymer or a mixture of polymers, each said polymer being non-amphiphilic and having a weight-average molar mass of less than or equal to 5,000 g/mol, and
- less than 10% of an amphiphilic component (c), or "surfactant", and
- less than 10% of other components (d),

the polymer base comprising 2% to 15% of a styrene-ethylenebutylene-styrene copolymer or "SEBS", in percentage by weight based on the weight of the binder, the content by weight of styrene in the SEBS being greater than 15% in percentage by weight based on the weight of said SEBS, the weight-average molar mass of said SEBS being greater than 100,000 g/mol.

**2.** The binder according to claim 1, wherein the content of SEBS is greater than or equal to 4% and less than or equal to 13% in percentage by weight based on the weight of the binder.

**3.** The binder according to either one of the preceding claims, wherein the content of styrene in the SEBS is greater than 20% and less than 60% in percentage by weight based on the weight of said SEBS.

**4.** The binder according to the immediately preceding claim, wherein the content of styrene in the SEBS is greater than 25% in percentage by weight based on the weight of said SEBS.

**5.** The binder according to any one of the preceding claims, wherein the weight-average molar mass of the SEBS is greater than 160,000 g/mol and less than 400,000 g/mol.

**6.** The binder according to any one of the preceding claims, wherein the amount of surfactant is greater than or equal to 0.5%.

**7.** The binder according to any one of the preceding claims, having, in percentage by weight based on the binder:

- an amount of polymer base of greater than or equal to 40% and less than or equal to 55%, and
- an amount of wax of greater than or equal to 35% and less than or equal to 53%, and
- an amount of surfactant of greater than or equal to 1% and less than or equal to 8%, and
- an amount of other components, preferably a stabilizer, of greater than or equal to 0.5% and less than or equal to 8%.

8. The binder according to the immediately preceding claim, having, in percentage by weight based on the binder:

 - an amount of polymer base of greater than or equal to 45% and less than or equal to 50%, and
 - an amount of wax of greater than or equal to 40% and less than or equal to 50%, and
 - an amount of surfactant of greater than or equal to 2% and less than or equal to 6%, and
 - an amount of other components, preferably a stabilizer, of greater than or equal to 1% and less than or equal to 4%.

9. The binder according to any one of the preceding claims, having at least one of the following characteristics:

 - each constituent of the polymer base has a weight-average molar mass of greater than 20,000 g/mol,
 - a constituent of the wax, preferably each constituent of the wax, has a weight-average molar mass of greater than 400 g/mol and less than 3,000 g/mol,
 - each constituent of the surfactant has a weight-average molar mass of less than 800 g/mol.

10. The binder according to the immediately preceding claim, having at least one of the following characteristics:

 - each constituent of the polymer base has a weight-average molar mass of greater than 30,000 g/mol,
 - a constituent of the wax, preferably each constituent of the wax, has a weight-average molar mass of less than 1,500 g/mol,
 - each constituent of the surfactant has a weight-average molar mass of less than 500 g/mol.

11. The binder according to any one of the preceding claims, having at least one of the following characteristics:

 - the polymer base comprises a polymer selected from polypropylenes, polyethylenes, ethylene-vinyl acetates, ethylene-ethyl acrylates, polystyrenes, polyethylene carbonates, diethyl phthalate, dioctyl phthalate, dibutyl phthalate, polyvinyl alcohol, polyvinyl acetate, ethylene-methacrylic acid copolymers, polyvinyl chloride, polyvinyl butyral, a polyacetal, a polymethyl methacrylate, a polybutyl methacrylate, a methacrylic acid ester copolymer, a methyl ethyl ketone, resins, and mixtures thereof,
 - the wax comprises, or even consists of, a wax selected from carnauba wax, a paraffin wax, a beeswax, a polyethylene wax, a microcrystalline wax, a vegetable oil, a groundnut oil, a mineral oil, glycerol and mixtures thereof, preferably a paraffin wax,
 - the surfactant comprises, or even consists of, an amphiphilic constituent selected from an ethylene bis(stearamide), stearin, palmitic acid, butyl stearate, boric acid, oleic acid, lauric acid, stearic acid and mixtures thereof.

12. The binder according to any one of the preceding claims, having at least one of the following characteristics:

 - the polymer base comprises a mixture of polypropylene and of polyethylene in a polypropylene/polyethylene weight ratio of greater than 25/75 and less than 50/50.
 - the surfactant consists of an amphiphilic constituent selected from an ethylene bis(stearamide), stearic acid and mixtures thereof.

13. An injection molding composition comprising between 30% and 65% of a binder according to any one of the preceding claims, in a percentage by volume based on the volume of the molding composition, the remainder being, for more than 90% by weight, a ceramic powder.

14. The molding composition according to the immediately preceding claim, having at least one of the following characteristics:

 - the amount of binder is greater than or equal to 45% and less than or equal to 55%, in percentage by volume based on the volume of the molding composition,
 - the ceramic powder comprises more than 90% by weight of nitride(s) and/or carbide(s) and/or oxide(s).

15. The molding composition according to the immediately preceding claim, wherein said oxides are selected from $ZrO_2$, $Y_2O_3$, $CeO_2$, CaO, MgO, manganese oxides, ZnO, praseodymium oxides, copper oxides, BaO, iron oxides, $Sc_2O_3$, $TiO_2$, $Al_2O_3$, $La_2O_3$, $Nd_2O_3$, $Yb_2O_3$, and mixtures thereof.

16. A method for manufacturing a sintered part, said method comprising the following steps:

A) producing a molding composition,
B) injection molding said molding composition in order to obtain a preform,
C) at least partially debinding the preform,
D) sintering the at least partially debound preform in order to obtain a sintered part,

the molding composition being in accordance with any one of claims 13 to 15.

[Fig 1]

[Fig 2]

**RÉFÉRENCES CITÉES DANS LA DESCRIPTION**

**Documents brevets cités dans la description**

- WO 2016003657 A1